# EUROPÄISCHE PATENTSCHRIFT

(11) **EP 2 825 420 B1**
(45) Veröffentlichungstag und Bekanntmachung des Hinweises auf die Patenterteilung: **03.07.2019**
(21) Anmeldenummer: 13708397.8
(22) Anmeldetag: 04.03.2013
(51) Int. Cl.: B60R 21/00, G06F 13/00, G08C 19/00

(54) **BETRIEBSVERFAHREN FÜR EINE MEHRKANALIGE SENSOREINHEIT**
OPERATING METHOD FOR A MULTI-CHANNEL SENSOR UNIT
PROCÉDÉ DE FONCTIONNEMENT POUR UNE UNITÉ DE DÉTECTION MULTICANAUX

(30) Priorität: 14.03.2012 DE 102012203968
(43) Veröffentlichungstag der Anmeldung: 21.01.2015
(73) Patentinhaber: Robert Bosch GmbH, 70442 Stuttgart (DE)
(72) Erfinder: TRINH, Hoang, 70839 Gerlingen (DE); KOPPLIN, Sascha, 74321 Bietigheim-Bissingen (DE)
(86) Internationale Anmeldenummer: PCT/EP2013/054251
(87) Internationale Veröffentlichungsnummer: WO 2013/135510

(56) Entgegenhaltungen:
- DE-A1- 10 111 265
- DE-A1-102006 031 237

## Beschreibung

### Stand der Technik

Die Erfindung geht aus von einem Verfahren zum Betreiben einer mehrkanaligen Sensoreinheit, insbesondere in einem Fahrzeug, nach der Gattung des Hauptanspruchs.

Aus der DE 101 11 265 A1 ist eine Vorrichtung zur Datenübertragung zwischen Fahrzeugsensoren und einem Steuergerät bekannt, die dazu dient, Datentelegramme mit Sensordaten von den Fahrzeugsensoren zu decodieren und in SPI (Serial Peripherial Interface)-Datentelegramme umzuformatieren. Weiterhin wird dann ein Schnittstellenbaustein des Steuergeräts die SPI-Datentelegramme zu dem Prozessor des Steuergeräts übertragen. Durch die Verwendung eines Altersbits ist es dem Prozessor des Steuergeräts möglich, entweder die neuesten Sensordaten oder die vorangegangenen Sensordaten abzurufen. Der Schnittstellenbaustein setzt die Sensordaten jeweils in ein 10-Bit-Datenfeld eines SPI-Datentelegramms um, wobei der Schnittstellenbaustein gegebenenfalls fehlende Daten ergänzt. Durch das Auszählen von Flanken ist es dem Schnittstellenbaustein möglich, die Datentelegramme von den Sensoren zu erkennen.

Aus der DE 10 2006 031237 A1 ist ein Steuergerät zur Ansteuerung von Personenschutzmitteln bzw. eine Vorrichtung zur Ansteuerung von Personenschutzmittein bzw. ein Verfahren zur Ansteuerung von Personenschutzmitteln bekannt, wobei vom Steuergerät zu einem ausgelagerten Unfallsensor ein Synchronimpuls versendet wird und das Steuergerät die Daten des wenigstens einen Unfallsensors in Abhängigkeit von einer Timermessung ab dem Synchronimpuls verarbeitet.

Für die Crashsensierung in Fahrzeugen sind zweikanalige Sensoreinheiten zum Erfassen von Beschleunigungen bekannt, welche zyklisch alle 500µs Sensordaten an ein zugehöriges Airbagsteuergerät senden. Die Datenkommunikation zwischen der zweikanaligen Sensoreinheit und dem Airbagsteuergerät erfolgt in der Regel nach einem SPI-Protokoll. Das bedeutet, dass das Airbagsteuergerät die Sensordaten der beiden Kanäle der Sensoreinheit mit einem zeitlichen Abstand von ca. 2µs innerhalb des 500µs Lesezyklus asynchron ausliest. Eine solche zweikanalige Sensoreinheit umfasst mindestens einen zweikanaligen Sensor zur Erfassung von Beschleunigungen und zur Ausgabe eines Sensorsignals für jeden Sensorkanal. Zudem ist für jeden Sensorkanal eine Signalaufbereitungseinheit zur Aufbereitung eines korrespondierenden Sensorsignals und zur Ausgabe von korrespondierenden Sensordaten an eine Schnittstelleneinheit vorgesehen. Die Schnittstelleneinheit tauscht über das SPI-Protokoll Daten mit dem Steuergerät aus. Des Weiteren ist jedem Sensorkanal ein Hauptregister zugeordnet. Die Hauptregister speichern die erfassten Beschleunigungswerte fortlaufend als aktuelle Sensordaten. In Reaktion auf Lesebefehle gibt die Schnittstelleneinheit die im korrespondierenden Hauptregister gespeicherten Sensordaten asynchron aus. Das bedeutet, dass die Schnittstelleneinheit beispielsweise bei Empfang eines ersten Lesebefehls die im ersten Hauptregister des ersten Sensorkanals gespeicherten aktuellen ersten Sensordaten ausgibt, und bei Empfang eines zweiten Lesebefehls die im zweiten Hauptregister des zweiten Sensorkanals gespeicherten aktuellen zweiten Sensordaten ausgibt. Dadurch besteht das Risiko, dass sich der Inhalt der zweiten Sensordaten im zweiten Hauptregister geändert hat und die ersten und zweiten Sensordaten nicht mehr die zeitgleich erfassten Beschleunigungswerte sondern zu verschiedenen Zeitpunkten erfasste Beschleunigungswerte der beiden Sensorkanäle repräsentieren. Mit Einführung des 32bit SPI-Protokolls verdoppelt sich der zeitliche Abstand zwischen dem Auslesen der ersten und zweiten Sensordaten und der Fehler zwischen dem ersten und zweiten Sensorkanal erhöht sich aufgrund der asynchronen Abtastung.

### Offenbarung der Erfindung

Vor diesem Hintergrund betrifft die vorliegende Erfindung ein Verfahren zum Betreiben einer mehrkanaligen Sensoreinheit, welche mindestens einen mehrkanaligen Sensor umfasst. Über den mindestens einen mehrkanaligen Sensor wird mindestens eine physikalische Größe erfasst und als Sensordaten ausgegeben, welche die erfasste physikalische Größe darstellen. Hierbei werden die Sensordaten von mindestens zwei Sensorkanälen in mindestens einem Hauptspeichermittel gespeichert und in Reaktion auf korrespondierende Lesebefehle asynchron ausgegeben. Erfindungsgemäß werden die aktuellen Sensordaten in Reaktion auf ein Triggersignal gleichzeitig in dem mindestens einen Hauptspeichermittel gespeichert. In Reaktion auf einen ersten Lesebefehl werden erste Sensordaten eines ersten Sensorkanals ausgegeben, welche in dem mindestens einen Hauptspeichermittel gespeichert sind. Zudem werden in Reaktion auf den ersten Lesebefehl weitere Sensordaten, welche in dem mindestens einen Hauptspeichermittel gespeichert sind, in mindestens einem Zusatzspeichermittel gespeichert, wobei die in dem mindestens einen Zusatzspeichermittel gespeicherten Sensordaten in Reaktion auf mindestens einen weiteren korrespondierenden Lesebefehl ausgegeben werden.

Nach dem erfindungsgemäßen Verfahren werden eine dritte Beschleunigung unter einem ersten Winkel von (45°) zur Fahrzeuglängsrichtung und eine zweite Beschleunigung unter einem zweiten Winkel von (-45°) zur Fahrzeuglängsrichtung erfasst. Bei einer solchen 45°-Applikation werden die Beschleunigungswerte in Fahrzeuglängsrichtung bzw. Fahrzeugquerrichtung aus den Sensordaten der beiden Sensorkanäle geometrisch ermittelt, wobei der aktuelle Beschleunigungswert in Fahrzeuglängsrichtung durch eine geometrische Subtraktion der Sensordaten der beiden Sensorkanäle und der aktuelle Beschleunigungswert in Fahrzeugquerrichtung durch eine geometrische Addition der Sensordaten der beiden Sensorkanäle ermittelt wird. Durch die Subtraktion kann für den aktuellen Beschleunigungswert in Fahrzeuglängsrichtung in vorteilhafter Weise eine so genannte "Common-Mode-Rejection" (Gleichtaktunterdrückung) erreicht werden.

Durch die in dem abhängigen Anspruch aufgeführten Maßnahmen und Weiterbildungen sind vorteilhafte Verbesserungen des im unabhängigen Patentanspruch 1 angegebenen Verfahrens zum Betreiben einer mehrkanaligen Sensoreinheit möglich.

In vorteilhafter Ausgestaltung des erfindungsgemäßen Verfahrens werden über den mindestens einen mehrkanaligen Sensor verschiedene oder gleiche physikalische Größen in einer gemeinsamen Erfassungsrichtung oder in mehrere Erfassungsrichtungen erfasst. So kann beispielsweise eine erste Beschleunigung in Fahrzeugquerrichtung und die eine zweite Beschleunigung in eine Fahrzeuglängsrichtung erfasst werden. Die beiden Sensorkanäle können dann in vorteilhafter Weise zur Erkennung von verschiedenen Crashtypen ausgewertet werden. Zudem kann beispielsweise der erste Sensorkanal zur Crasherkennung und der zweite Sensorkanal zur Plausibilisierung des ersten Sensorkanals ausgewertet werden.

Ausführungsbeispiele der Erfindung sind in den Zeichnungen dargestellt und werden in der nachfolgenden Beschreibung näher erläutert. In den Zeichnungen bezeichnen gleiche Bezugszeichen Komponenten bzw. Elemente, die gleiche bzw. analoge Funktionen ausführen.

### Kurze Beschreibung der Zeichnungen

Fig. 1 zeigt ein schematisches Blockdiagramm einer Sensoranordnung mit einem Ausführungsbeispiel einer mehrkanaligen Sensoreinheit und einer Auswerte- und Steuereinheit.
Fig. 2 zeigt eine schematische Darstellung einer 45°-Applikation einer mehrkanaligen Sensoreinheit für die Sensoranordnung aus Fig. 1.
Fig. 3 zeigt eine detailliertere Darstellung einer Signalaufbereitungseinheit für die mehrkanalige Sensoreinheit aus Fig. 1 oder 2.
Fig. 4 zeigt ein schematisches Flussdiagramm eines Ausführungsbeispiels eines erfindungsgemäßen Verfahrens zum Betreiben einer mehrkanaligen Sensoreinheit für ein Fahrzeug.

### Ausführliche Beschreibung der Zeichnungen

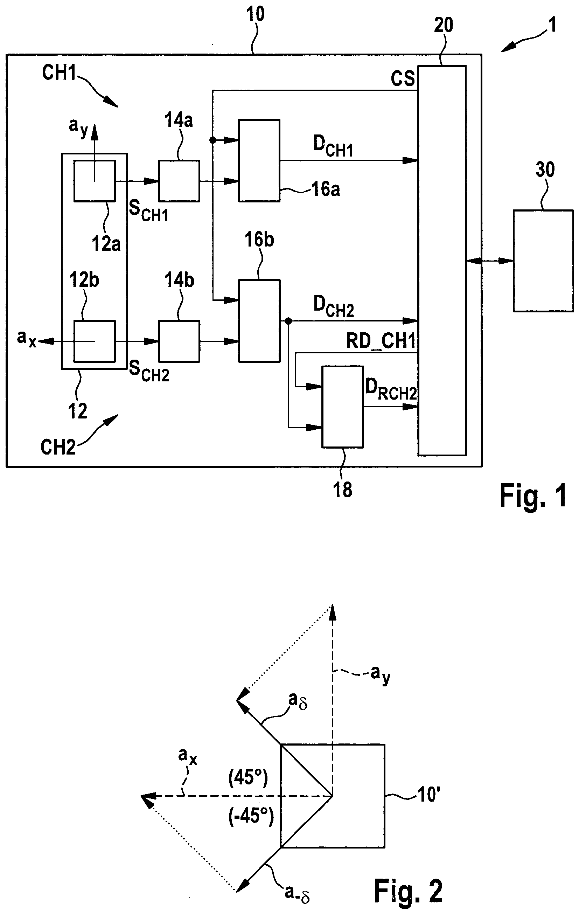

Wie aus Fig. 1 ersichtlich ist, umfasst das dargestellte Ausführungsbeispiel einer mehrkanaligen Sensoreinheit 10 für ein Fahrzeug einen mehrkanaligen Sensor 12 zur Erfassung einer physikalischen Größe aₓ, a_{y} und zur Ausgabe eines Sensorsignals S_{CH1}, S_{CH2} für jeden Sensorkanal CH1, CH2 und eine Schnittstelleneinheit 20, über welche die Sensoreinheit 10 mit einem Steuergerät 30 verbunden ist. Wie aus Fig. 1 weiter ersichtlich ist, ist für jeden Sensorkanal CH1, CH2 eine Signalaufbereitungseinheit 14a, 14b zur Aufbereitung eines korrespondierenden Sensorsignals S_{CH1}, S_{CH2} und zur Ausgabe von korrespondierenden Sensordaten D_{CH1,} D_{CH2}, welche die erfasste physikalische Größe aₓ, a_{y} darstellen, an die Schnittstelleneinheit 20 vorgesehen. Die Sensoreinheit 10 weist mindestens ein Hauptspeichermittel 16a auf, welches die Sensordaten D_{CH1}, D_{CH2} von mindestens zwei Sensorkanälen CH1, CH2 speichert. Im dargestellten Ausführungsbeispiel ist jedem Sensorkanal CH1, CH2 ein Hauptspeichermittel 16a, 16b zugeordnet, welches beispielsweise als Register ausgeführt ist und jeweils die aktuellen Sensordaten D_{CH1,} D_{CH2} speichert. In Reaktion auf korrespondierende Lesebefehle gibt die Sensoreinheit 10 über die Schnittstelleneinheit 20 die gespeicherten Sensordaten D_{CH1,} D_{CH2} asynchron an das Steuergerät 30 aus.

Die Sensoreinheit 10 weist mindestens ein Zusatzspeichermittel 18 auf, und die Sensoreinheit 10 speichert die aktuellen Sensordaten D_{CH1,} D_{CH2} in Reaktion auf ein Triggersignal CS gleichzeitig in dem mindestens einen Hauptspeichermittel 16a, 16b. In Reaktion auf einen ersten Lesebefehl RD_CH1 gibt die Sensoreinheit 10 erste Sensordaten D_{CH1} eines ersten Sensorkanals CH1 aus, welche in dem mindestens einen Hauptspeichermittel 16a gespeichert sind. Zudem speichert die Sensoreinheit 10 weitere Sensordaten D_{CH2} in Reaktion auf den ersten Lesebefehl RD_CH1 in dem mindestens einen Zusatzspeichermittel 18. In Reaktion auf mindestens einen weiteren korrespondierenden Lesebefehl gibt die Sensoreinheit 10 die in dem mindestens einen Zusatzspeichermittel 18 gespeicherten Sensordaten D_{RCH2} aus. Das mindestens eine Zusatzspeichermittel ist vorzugsweise ebenfalls als Register ausgeführt.

Zur Kommunikation mit dem externen Steuergerät 30 verwendet die Schnittstelleneinheit 20 der Sensoreinheit 10 ein SPI-Busprotokoll. Das bedeutet, dass die Sensordaten D_{CH1,} D_{CH2} mit der abfallenden Flanke eines Chip-Select-Signals (CS) in die Hauptspeichermittel 16a, 16b übernommen werden. Der erste Sensorkanal wird dann über den SPI Befehl RD_SensorData_CH0 gelesen, welcher dem in Fig. 1 dargestellten Lesebefehl RD_CH1 entspricht. Mit dem SPI Befehl RD_SensorData_CH0 (RD_CH1 in Fig. 1) werden die Daten des ersten Hauptspeichermittels 16a in das Zusatzspeichermittel 18 übernommen. Damit ist der Inhalt des Zusatzspeichermittels 18 mit den gelesenen ersten Sensordaten D_{CH1} des ersten Sensorkanals CH1 synchron. Die im Zusatzspeichermittel 18 gespeicherten Sensordaten D_{RCH2} können über den SPI Befehl RD_CapturedData_CH1 gelesen werden. Zudem können über einen SPI Befehl RD_SensorData_CH1 auch die im zweiten Hauptspeichermittel 16b gespeicherten zweiten Sensordaten D_{CH2} gelesen und ausgewertet werden.

Im dargestellten ersten Ausführungsbeispiel ist die Sensoreinheit 10 zweikanalig ausgeführt, wobei beide Sensorkanäle CH1, CH2 jeweils eine Beschleunigung aₓ, a_{y} als physikalische Größe in eine vorgegebene Erfassungsrichtung x, y erfassen. Der zweikanalig Sensor 12 umfasst ein erstes Sensorelement 12a zur Erfassung einer ersten Beschleunigung a_{y} in eine erste Raumrichtung y, welche einer Fahrzeugquerrichtung entspricht, und ein zweites Sensorelement 12b zu Erfassung einer zweiten Beschleunigung aₓ in eine zweite Raumrichtung x, welche einer Fahrzeuglängsrichtung entspricht. Bei alternativen Ausführungsformen können die Sensorelemente 12a, 12b auch verschiedene physikalische Größen in einer gemeinsamen Erfassungsrichtung oder in mehreren Erfassungsrichtungen oder die gleiche physikalische Größe in einer gemeinsamen Erfassungsrichtung erfassen.

Fig. 2 zeigt eine 45°-Applikation einer mehrkanaligen Sensoreinheit 10'. Wie aus Fig. 2 ersichtlich ist, ist auch bei der 45°-Applikation die Sensoreinheit 10' zweikanalig ausgeführt und beide Sensorkanäle CH1, CH2 erfassen jeweils eine Beschleunigung a_{δ}, a_{-δ} als physikalische Größe in eine vorgegebene Erfassungsrichtung δ, -δ. Im Unterschied zum ersten Ausführungsbeispiel erfasst ein erstes Sensorelement 12a eine ersten Beschleunigung a_{δ} in eine erste Raumrichtung δ, welche einen Winkel von 45° zur Fahrzeuglängsrichtung aufweist, und ein zweites Sensorelement 12b erfasst eine zweite Beschleunigung a_{-δ} in eine zweite Raumrichtung -δ, welche einen Winkel von -45° zur Fahrzeuglängsrichtung aufweist. Das bedeutet, dass die Beschleunigung aₓ in Fahrzeuglängsrichtung durch eine geometrische (vektorielle) Subtraktion der beiden erfasstem Beschleunigungen a_{δ}, a_{-δ} berechnet wird, und die Beschleunigung a_{y} in Fahrzeugquerrichtung wird durch eine geometrische (vektorielle) Addition der beiden erfasstem Beschleunigungen a_{δ}, a_{-δ} berechnet. Durch die Subtraktion kann für den aktuellen Beschleunigungswert aₓ in Fahrzeuglängsrichtung x in vorteilhafter Weise eine so genannte "Common-Mode-Rejection" (Gleichtaktunterdrückung) erreicht werden.

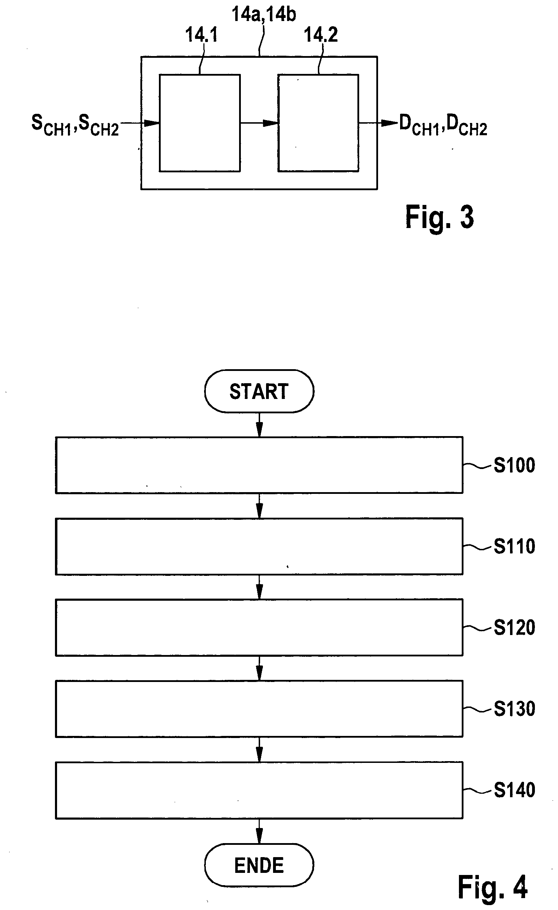

Wie aus Fig. 3 ersichtlich ist, umfasst die Signalaufbereitungseinheit 14a, 14b für jeden Sensorkanal CH1, CH2 eine digitale Filtereinheit (FIR) 14.1 und eine Offset-Einheit 14.2, welche einen vorhandenen Offset im Sensorsignal S_{CH1}, S_{CH2} entfernt und die Sensordaten D_{CH1}, D_{CH2} ausgibt.

Fig. 4 zeigt ein Ausführungsbeispiel eines erfindungsgemäßen Verfahrens zum Betreiben einer mehrkanaligen Sensoreinheit 10, 10' für ein Fahrzeug, welche mindestens einen mehrkanaligen Sensor 12 und eine Schnittstelleneinheit 20 umfasst.

Wie aus Fig. 4 ersichtlich ist, wird in einem Schritt S100 über den mindestens einen mehrkanaligen Sensor 12 für mindestens zwei Sensorkanäle CH1, CH2 jeweils eine physikalische Größe aₓ, a_{y}, a_{-δ}, a_{δ} zeitgleich erfasst und als korrespondierendes Sensorsignal S_{CH1}, S_{CH2} ausgegeben. In einem Schritt S110 werden die korrespondierenden Sensorsignale S_{CH1}, S_{CH2} in jedem Sensorkanal CH1, CH2 aufbereitet und in korrespondierende Sensordaten D_{CH1}, D_{CH2} umgewandelt. In einem Schritt S120 werden die aktuellen Sensordaten D_{CH1,} D_{CH2} in Reaktion auf ein Triggersignal CS gleichzeitig in einem dem korrespondierenden Sensorkanal CH1, CH2 zugeordneten Hauptspeichermittel 16a, 16b gespeichert. Im Schritt S130 werden im ersten Hauptspeichermittel 16a gespeicherte erste Sensordaten D_{CH1} des ersten Sensorkanals CH1 in Reaktion auf einen ersten Lesebefehl RD_CH1 über die Schnittstelleneinheit 20 ausgegeben. Gleichzeitig werden die in den anderen Hauptspeichermitteln 16b der anderen Sensorkanäle CH2 gespeicherten Sensordaten D_{CH2} in Reaktion auf den ersten Lesebefehl RD_CH1 in mindestens einem Zusatzspeichermittel 18 gespeichert. In einem Schritt S140 werden die in dem mindestens einen Zusatzspeichermittel 18 gespeicherten Sensordaten D_{RCH2} in Reaktion auf mindestens einen weiteren korrespondierenden Lesebefehl über die Schnittstelleneinheit 20 ausgegeben.

## Patentansprüche

1. Verfahren zum Betreiben einer mehrkanaligen Sensoreinheit, welche mindestens einen mehrkanaligen Sensor (12) umfasst, wobei über den mindestens einen mehrkanaligen Sensor (12) mindestens eine physikalische Größe (aₓ, a_{y}, a_{(-δ)}, a_{δ}) erfasst wird und als Sensordaten (D_{CH1}, D_{CH2}), welche die erfasste physikalische Größe (aₓ, a_{y}, a_{-δ}, a_{δ}) darstellen, ausgegeben werden, wobei die Sensordaten (D_{CH1}, D_{CH2}) von mindestens zwei Sensorkanälen (CH1, CH2) in mindestens einem Hauptspeichermittel (16a, 16b) gespeichert und in Reaktion auf korrespondierende Lesebefehle asynchron ausgegeben werden, wobei die aktuellen Sensordaten (D_{CH1}, D_{CH2}) in Reaktion auf ein Triggersignal (CS) gleichzeitig in dem mindestens einen Hauptspeichermittel (16a, 16b) gespeichert werden, wobei erste Sensordaten (D_{CH1}) eines ersten Sensorkanals (CH1), welche in dem mindestens einen Hauptspeichermittel (16a) gespeichert sind, in Reaktion auf einen ersten Lesebefehl (RD_CH1) ausgegeben werden, und wobei weitere Sensordaten (D_{CH2}), welche in dem mindestens einen Hauptspeichermittel (16b) gespeichert sind, in Reaktion auf den ersten Lesebefehl (RD_CH1) in mindestens einem Zusatzspeichermittel (18) gespeichert werden, und wobei die in dem mindestens einen Zusatzspeichermittel (18) gespeicherten Sensordaten (D_{RCH2}) in Reaktion auf mindestens einen weiteren korrespondierenden Lesebefehl ausgegeben werden, wobei eine erste Beschleunigung (a_{y}) in Fahrzeugquerrichtung (y) und die eine zweite Beschleunigung (aₓ) in eine Fahrzeuglängsrichtung (x) erfasst wird,
**dadurch gekennzeichnet, dass**
eine dritte Beschleunigung (a_{δ}) unter einem ersten Winkel von (45°) zur Fahrzeuglängsrichtung (x) und eine zweite Beschleunigung (a_{-δ}) unter einem zweiten Winkel von (-45°) zur Fahrzeuglängsrichtung (x) erfasst wird.

2. Verfahren nach Anspruch 1, **dadurch gekennzeichnet, dass** über den mindestens einen mehrkanaligen Sensor (12) verschiedene oder gleiche physikalische Größen (aₓ, a_{y}, a(_{-δ}), a_{δ}) in einer gemeinsamen Erfassungsrichtung oder in mehrere Erfassungsrichtungen erfasst werden.

## Claims

1. Method for operating a multi-channel sensor unit which comprises at least one multi-channel sensor (12), wherein at least one physical variable (aₓ, a_{y}, a(_{-δ}), a_{δ}) is captured using the at least one multi-channel sensor (12) and is output as sensor data (D_{CH1}, D_{CH2}) representing the captured physical variable (aₓ, a_{y}, a_{-δ}, a_{δ}), wherein the sensor data (D_{CH1}, D_{CH2}) from at least two sensor channels (CH1, CH2) are stored in at least one main storage means (16a, 16b) and are output in an asynchronous manner in response to corresponding read commands, wherein the current sensor data (D_{CH1}, D_{CH2}) are simultaneously stored in the at least one main storage means (16a, 16b) in response to a trigger signal (CS), wherein first sensor data (D_{CH1}) from a first sensor channel (CH1) which are stored in the at least one main storage means (16a) are output in response to a first read command (RD_CH1), and wherein further sensor data (D_{CH2}) which are stored in the at least one main storage means (16b) are stored in at least one additional storage means (18) in response to the first read command (RD_CH1), and wherein the sensor data (D_{RCH2}) stored in the at least one additional storage means (18) are output in response to at least one further corresponding read command, wherein a first acceleration (a_{y}) is captured in the vehicle transverse direction (y) and a second acceleration (aₓ) is captured in a vehicle longitudinal direction (x),
**characterized in that**
a third acceleration (as) is captured at a first angle of (45°) with respect to the vehicle longitudinal direction (x) and a second acceleration (a_{-δ}) is captured at a second angle of (-45°) with respect to the vehicle longitudinal direction (x).

2. Method according to Claim 1, **characterized in that** different or identical physical variables (aₓ, a_{y}, a_{(-δ)}, a_{δ}) are captured in a common capture direction or in a plurality of capture directions using the at least one multi-channel sensor (12).

## Revendications

1. Procédé pour faire fonctionner une unité de détection à canaux multiples, laquelle comprend au moins un détecteur à canaux multiples (12), au moins une grandeur physique (aₓ, a_{y}, a_{(-δ)}, a_{δ}) étant détectée par le biais de l'au moins un détecteur à canaux multiples (12) et étant délivrée sous la forme de données de détecteur (D_{CH1}, D_{CH2}) qui représentent la grandeur physique (aₓ, a_{y}, a_{-δ}, a_{δ}) détectée, les données de détecteur (D_{CH1}, D_{CH2}) d'au moins deux canaux de détecteur (CH1, CH2) étant mémorisées dans au moins un moyen de mémorisation principal (16a, 16b) et étant délivrées de manière asynchrone en réaction à des instructions de lecture correspondantes,
les données de détecteur (D_{CH1}, D_{CH2}) actuelles étant mémorisées simultanément dans l'au moins un moyen de mémorisation principal (16a, 16b) en réaction à un signal de déclenchement (CS), des premières données de détecteur (D_{CH1}) du premier canal de détecteur (CH1), lesquelles sont mémorisées dans l'au moins un moyen de mémorisation principal (16a), étant délivrées en réaction à une première instruction de lecture (RD_CH1), et des données de détecteur supplémentaires (D_{CH2}), lesquelles sont mémorisées dans l'au moins un moyen de mémorisation principal (16b), étant mémorisées dans au moins un moyen de mémorisation supplémentaire (18) en réaction à la première instruction de lecture (RD_CH1), et les données de détecteur (D_{RCH2}) qui sont mémorisées dans l'au moins un moyen de mémorisation supplémentaire (18) étant délivrées en réaction à au moins une instruction de lecture correspondante supplémentaire, une première accélération (a_{y}) dans le sens transversal du véhicule (y) et une deuxième accélération (aₓ) dans le sens longitudinal du véhicule (x) étant détectées,
**caractérisé en ce que**
une troisième accélération (as) sous un premier angle de 45° par rapport au sens longitudinal du véhicule (x) et une deuxième accélération (a_{-δ}) sous un deuxième angle de (-45°) par rapport au sens longitudinal du véhicule (x) étant détectées.

2. Procédé selon la revendication 1, **caractérisé en ce que** des grandeurs physiques (aₓ, a_{y}, a_{(-δ)}, a_{δ}) différentes ou identiques sont détectées par le biais de l'au moins un détecteur à canaux multiples (12) dans une direction de détection commune ou dans plusieurs directions de détection.
